# FASCICULE DE BREVET EUROPEEN

(11) **EP 1 538 920 B1**
(45) Date de publication et mention de la délivrance du brevet: **31.05.2006**
(21) Numéro de dépôt: 03758271.5
(22) Date de dépôt: 25.08.2003
(51) Int. Cl.: A23C 9/146

(54) **PROCEDE DE DECALCIFICATION D'UNE SOLUTION AQUEUSE, EN PARTICULIER DE LACTOSERUM OU D'UN PERMEAT D'ULTRAFILTRATION DE LACTOSERUM**
VERFAHREN ZUR DECALCIFIZIERUNG EINER WÄSSRIGEN LÖSUNG, INSBESONDERE MOLKE ODER MOLKE-ULTRAFILTRATIONSPERMEAT
METHOD FOR DECALCIFICATION OF AN AQUEOUS SOLUTION, IN PARTICULAR OF LACTOSERUM OR OF AN ULTRAFILTRATION PERMEATE OF LACTOSERUM

(30) Priorité: 06.09.2002 FR 0211039
(43) Date de publication de la demande: 15.06.2005
(73) Titulaire: APPLEXION, F-78680 Epone (FR)
(72) Inventeur: THEOLEYRE, Marc-André, F-75020 Paris (FR)
(74) Mandataire: Kedinger, Jean-Paul
(86) Numéro de dépôt international: PCT/FR2003/002573
(87) Numéro de publication internationale: WO 2004/021795

(56) Documents cités:
- EP-A- 1 053 685
- FR-A- 2 390 106
- US-A- 2 708 632
- A. POTGIETER: "Demineralization of cheese whey using ammonium bicarbonate process" NEW ZEALAND JOURNAL OF DAIRY SCIENCE AND TECHNOLOGY, vol. 22, no. 2, 1987, pages 111-121, XP008017372

## Description

La présente invention a pour objet un procédé de décalcification d'une solution aqueuse comprenant des cations polyvalents Ca²⁺ et Mg²⁺ et des anions aptes à former des complexes avec une partie au moins desdits cations polyvalents, tels que les anions phosphate, lactate ou citrate.

Dans l'industrie laitière, comme dans de nombreuses autres industries, la présence de calcium et/ou de magnésium dans des liquides à traiter, limite certaines opérations et notamment les opérations de concentration de ces liquides.

Ainsi par exemple, dans le cas de la production de lactose cristallisé à partir de lactoserum, la présence de calcium gêne la concentration de ce lactosérum et limite la qualité du lactose produit du fait d'une co-précipitation de sel de calcium.

La présence de calcium et/ou de magnésium est également un frein à l'utilisation des procédés de séparation utilisés pour la purification, tels que l'électrodialyse ou la chromatographie.

Plusieurs techniques ont été utilisées dans le passé pour éliminer les ions Ca²⁺ et Mg²⁺ présents dans un milieu aqueux.

Il s'agit notamment des techniques faisant appel à des résines cationiques fortes dont le contre-ion est Na⁺ ou K⁺, pour la décalcification (adoucissement) d'eau ou de jus, en particulier en sucrerie.

L'élimination des ions Ca²⁺ et Mg²⁺ permet d'améliorer les performances des procédés en aval, en limitant les risques de précipitation de sels insolubles.

Lors de la percolation de l'eau ou du jus à travers ces résines cationiques fortes, les ions Ca²⁺ et Mg²⁺ présents dans cette eau ou ce jus, sont échangés avec les ions Na⁺ ou K⁺ des résines.

Lorsque ces dernières sont saturées, celles-ci sont régénérées par passage sur celles-ci d'une solution aqueuse de NaCl ou d'une solution aqueuse contenant des ions Na⁺ ou K⁺. Il y a alors échange des ions Na⁺ ou K⁺ de cette solution avec les ions Ca²⁺ et Mg²⁺ qui se sont fixés sur les résines.

On notera cependant que dans le cas des lactosérums par exemple, et en particulier des lactosérums doux, la décalcification au moyen de résines cationiques dont le contre-ion est Na⁺ ou K⁺, suivant le cycle dit d'adoucissement, est rendue difficile du fait de la formation de complexes entre les ions Ca²⁺ et Mg²⁺ et la partie anionique de certains acides, généralement faibles, dont les plus connus sont l'acide phosphorique et certains acides organiques tels que l'acide citrique et l'acide lactique.

Les ions Ca²⁺ et Mg²⁺ ainsi complexés se trouvent de ce fait beaucoup moins disponibles pour un échange avec les ions Na⁺ ou K⁺ des résines et les rendements de décalcification s'en trouvent amoindris.

Pour contourner cette difficulté, on a eu recours à des résines cationiques faibles, dites chélatantes, ayant plus d'affinité pour les ions Ca²⁺ et Mg²⁺ que les résines cationiques fortes susmentionnées.

Toutefois, lorsque le contre-ion de ces résines est Na⁺ ou K⁺, leur régénération est coûteuse, car elles nécessitent une première régénération avec un acide, généralement l'acide chlorhydrique ou l'acide sulfurique, pour remplacer par des ions H⁺ les ions Ca²⁺ et Mg²⁺ fixés par ces résines, puis une deuxième régénération avec de la soude ou de la potasse pour remplacer les ions H⁺ par des ions Na⁺ ou K⁺.

La déminéralisation totale des lactosérums est parfois envisagée par passage en série d'abord sur une résine cationique dont le contre-ion est H⁺, régénérable par un acide, puis sur une résine anionique dont le contre-ion est OH⁻, régénérable par une base.

FR-A-2 390 106 décrit un procédé de dessalement du petit-lait.

Lors de la percolation des lactosérums à travers la résine cationique, les ions Ca²⁺ et Mg²⁺ viennent remplacer les ions H⁺ fixés sur la résine. Il en résulte une baisse sensible du pH des lactosérums en cours de traitement, baisse qui a pour effet de détruire les complexes susmentionnés entre les ions Ca²⁺ et Mg²⁺ et les anions phosphate et/ou les anions d'acides organiques (lactacte, citrate...) présents dans lesdits lactosérums. Ces ions Ca²⁺ et Mg²⁺ sont alors disponibles pour l'échange ionique.

Si par un tel procédé, on peut effectivement produire une solution quasiment pure de lactose, ce procédé est cependant coûteux en produits chimiques et produit des volumes d'effluents importants. De plus, cette technique est peu sélective et élimine de façon peu différenciée toutes les espèces ioniques quel que soit leur impact sur les procédés en aval.

Le but de la présente invention est donc de proposer un procédé de décalcification efficace mais ne présentant pas les inconvénients évoqués ci-dessus des procédés antérieurement connus.

Plus précisément, la présente invention a pour objet un procédé tel que défini dans le premier paragraphe de la présente description et qui se caractérise en ce qu'il comprend les opérations :
(a) de substitution d'une partie au moins desdits anions aptes à former des complexes de la solution aqueuse par des anions monovalents tels que Cl⁻ non aptes à former de tels complexes, et
(b) de substitution d'une partie au moins desdits cations polyvalents de la solution aqueuse par des cations métalliques monovalents, tels que NA⁺ et/ou K⁺,
l'opération (b) étant réalisée simultanément à l'opération (a) ou réalisée sur la solution aqueuse ayant subi l'opération (a).

Il a en effet été mis en évidence que le remplacement d'une partie au moins des anions aptes à former des complexes avec les cations polyvalents, par des anions monovalents non aptes à former de tels complexes, préalablement ou simultanément au remplacement des cations polyvalents (Ca²⁺, Mg²⁺) par des cations métalliques monovalents (par exemple Na⁺ ou K⁺), c'est-à-dire préalablement ou simultanément à la décalcification proprement dite, permettait d'améliorer grandement les rendements de décalcification.

On comprendra en effet qu'en remplaçant de manière spécifique les anions formant des complexes avec les cations polyvalents, par des anions monovalents non susceptibles de former de tels complexes, on détruit plus ou moins ces complexes et augmente ainsi la disponibilité des cations polyvalents de la solution à traiter qui peuvent de ce fait être remplacés plus facilement par les cations métalliques monovalents de la résine.

On notera que dans le procédé selon l'invention, il n'y a pas à proprement parler de déminéralisation, mais juste remplacement de certains ions indésirables (cations polyvalents) par d'autres ions métalliques plus neutres pour la suite du traitement de la solution aqueuse en cause.

Selon un mode de réalisation de l'invention, l'opération (a) comprend le traitement de ladite solution aqueuse par une résine anionique dont le contre-ion est un anion monovalent non apte à former des complexes avec lesdits cations polyvalents, et l'opération (b) comprend le traitement de ladite solution aqueuse par une résine cationique dont le contre-ion est un cation métallique monovalent.

On ajoutera que la résine anionique et la résine cationique sont de préférence respectivement une résine anionique forte et une résine cationique forte.

A titre d'exemple de résine anionique forte, on citera la résine IRA 458 de la société américaine Rohm and Haas et à titre d'exemple de résine cationique forte, on citera la résine SR1 LNA de cette même société.

Par ailleurs, lorsque la solution aqueuse à traiter comprend en outre des anions monovalents non aptes à former des complexes avec lesdits cations polyvalents, il sera avantageux de choisir en tant que contre-ion de la résine anionique, un anion de même nature que les anions monovalents présents dans ladite solution aqueuse.

D'autre part, lorsque cette solution aqueuse comprend en outre des cations métalliques monovalents (tels que Na⁺ et/ou K⁺), il sera avantageux de choisir en tant que contre-ion de la résine cationique, un cation de même nature que les cations métalliques monovalents présents dans ladite solution aqueuse.

Le procédé selon la présente invention peut en outre comprendre une opération (c) de régénération de la résine anionique et/ou de la résine cationique au moyen d'un agent de régénération, cette opération pouvant être effectuée en série sur la résine anionique puis la résine cationique ou en parallèle respectivement sur la résine anionique et la résine cationique.

On précisera que l'agent de régénération sera de préférence une solution aqueuse comprenant un sel dissous dont le cation est de même nature que le cation métallique monovalent constituant le contre-ion de la résine cationique et/ou dont l'anion est de même nature que l'anion monovalent constituant le contre-ion de la résine anionique.

On notera que suivant la composition ionique de la solution aqueuse à traiter, un ajustement du pH de l'agent de régénération peut être nécessaire pour éviter tout risque de précipitation d'un sel de calcium ou de magnésium insoluble. Ainsi, si par exemple ladite solution aqueuse à traiter contient du phosphate de calcium, on ajustera le pH par addition d'un acide, notamment l'acide phosphorique ou chlorhydrique.

La présente invention comprend par ailleurs l'utilisation du procédé ci-dessus pour la décalcification d'un lactosérum ou d'un perméat résultant de l'ultrafiltration d'un lactosérum, ce lactosérum et ce perméat comprenant des ions Ca²⁺ et Mg²⁺, des anions Cl⁻, des cations Na⁺ et K⁺ et des anions choisis dans le groupe constitué par les anions phosphate, les anions issus d'acides organiques aptes à former des complexes avec les ions Ca²⁺ et Mg²⁺ et leurs mélanges.

Dans une telle application, l'anion monovalent constituant le contre-ion de la résine anionique est de préférence l'anion Cl⁻ et le cation monovalent constituant le contre-ion de la résine cationique est de préférence le cation Na⁺ ou K⁺ et l'agent de régénération est alors de préférence une solution aqueuse de NaCl ou tout effluent aqueux disponible contenant des ions Na⁺ et/ou K⁺ et Cl⁻.

Le tableau ci-après présente les performances obtenues sur un lactosérum doux à décalcifier d'une part, par un traitement avec une résine de décalcification seule (résine cationique forte : système CF) et d'autre part, avec une résine anionique forte AF suivie en série par une résine cationique forte CF (système AF-CF), le fluide utilisé pour la régénération de ces résines étant une solution aqueuse de NaCl et/ou de KC1.

**Tableau**

| Système | CF | AF-CF |
|---|---|---|
| Volume passé sur les résines (en volumes de lit) | 26 | 35 |
| Ca²⁺ et Mg²⁺ dans la solution à traiter (méq./l) | 25 | 25 |
| Ca²⁺ et Mg²⁺ dans l'effluent sortant (méq./l) | 6 | 2 |
| Taux de décalcification (%) | 76 | 92 |
| Capacité utile (éq./l de résine cationique) * | 0,50 | 0,80 |
| Niveau de régénération (éq./l de résine cationique) ** | 2,4 | 2,4 |
| Rendement de régénération (%) | 20,8 | 33,3 |

| | | |
|---|---|---|
| * quantité d'ions Ca²⁺ et/ou Mg²⁺ fixés par litre de résine cationique | | |
| ** quantité d'ions Na⁺ ou K⁺ utilisés pour la régénération d'un litre de résine cationique | | |

Ce tableau montre que le passage en série de la solution à traiter à travers le système AF-CF permet d'atteindre des taux de décalcification bien plus élevés que ceux obtenus avec le système CF.

Il apparaît également que le rendement de régénération des résines est meilleur dans le cas du système AF-CF. Ceci est un point extrêmement important ; en effet quand, pour ladite régénération, on ne dispose que d'un agent de régénération dont la teneur en anions et cations monovalents est limitée, on peut éviter d'ajouter des anions et cations monovalents d'appoint à l'agent de régénération, ce qu'il serait impossible de faire dans le cas de l'utilisation du système CF.

## Revendications

1. Procédé de décalcification d'une solution aqueuse comprenant des cations polyvalents Ca²⁺ et Mg²⁺ et des anions aptes à former des complexes avec une partie au moins des cations polyvalents, **caractérisé en ce qu'**il comprend les opérations :
(a) de substitution d'une partie au moins desdits anions aptes à former des complexes de la solution aqueuse par des anions monovalents tels que Cl⁻ non aptes à former de tels complexes, et
(b) de substitution d'une partie au moins desdits cations polyvalents de la solution aqueuse par des cations métalliques monovalents, tels que Na⁺ et/ou K⁺,
l'opération (b) étant réalisée simultanément à l'opération (a) ou réalisée sur la solution aqueuse ayant subi l'opération (a).

2. Procédé selon la revendication 1, **caractérisé en ce que** l'opération (a) comprend le traitement de ladite solution aqueuse par une résine anionique dont le contre-ion est un anion monovalent non apte à former des complexes avec lesdits cations polyvalents, et l'opération (b) comprend le traitement de ladite solution aqueuse par une résine cationique dont le contre-ion est un cation métallique monovalent.

3. Procédé selon la revendication 2, dans lequel ladite solution aqueuse comprend en outre des anions monovalents non aptes à former des complexes avec lesdits cations polyvalents, **caractérisé en ce que** ledit anion monovalent constituant le contre-ion de la résine anionique est de même nature que les anions monovalents présents dans la solution aqueuse.

4. Procédé selon la revendication 2 ou 3, dans lequel la solution aqueuse comprend en outre des cations métalliques monovalents, **caractérisé en ce que** le cation métallique monovalent constituant le contre-ion de la résine cationique est de même nature que les cations métalliques monovalents présents dans la solution aqueuse.

5. Procédé selon l'une des revendications 2 à 4, **caractérisé en ce qu'**il comprend en outre une opération (c) de régénération de la résine anionique et/ou de la résine cationique au moyen d'un agent de régénération.

6. Procédé selon la revendication 5, **caractérisé en ce que** l'agent de régénération est une solution aqueuse comprenant un sel dissous dont le cation est de même nature que le cation métallique monovalent constituant le contre-ion de la résine cationique.

7. Procédé selon la revendication 6, **caractérisé en ce que** l'anion du sel dissous est de même nature que l'anion monovalent constituant le contre-ion de la résine anionique.

8. Procédé selon l'une quelconque des revendications 5 à 7, **caractérisé en ce que** l'opération (c) de régénération comprend le traitement en série de la résine anionique puis de la résine cationique.

9. Procédé selon l'une des revendications 5 à 7, **caractérisé en ce que** l'opération (c) de régénération comprend le traitement en parallèle de la résine anionique et de la résine cationique.

10. Utilisation du procédé selon l'une quelconque des revendications précédentes pour la décalcification d'un lactosérum ou d'un perméat résultant de l'ultrafiltration d'un lactosérum, ce lactosérum et ce perméat comprenant des ions Ca²⁺ et Mg²⁺, des anions Cl⁻, des cations Na⁺ et K⁺ et des anions choisis dans le groupe constitué par les anions phosphate, les anions issus d'acides organiques aptes à former des complexes avec les ions Ca²⁺ et Mg²⁺ et leurs mélanges.

## Claims

1. Decalcification method of an aqueous solution comprising multivalent cations Ca²⁺ and Mg²⁺ and anions able to form complexes with a at least a part of said multivalent cations, **characterised in that** it comprises the operations:
(a) of replacement of at least a part of said anions able to form complexes of the aqueous solution by monovalent anions such as Cl⁻, non-able to form such complexes, and
(b) of replacement of at least a part of said multivalent cations of the aqueous solution by monovalent metal cations, such as Na⁺ and/or K⁺,
operation (b) being performed simultaneously to operation (a) or performed on the aqueous solution having undergone operation (a).

2. Method according to claim 1, **characterised in that** operation (a) comprises the processing of said aqueous solution by an anionic resin of which the counter-ion is a monovalent anion non-able to form complexes with said multivalent cations, and operation (b) comprises the treatment of said aqueous solution by a cationic resin of which the counter-ion is a monovalent metal cation.

3. Method according to claim 2, in which said aqueous solution further comprises monovalent anions non-able to form complexes with said multivalent cations, **characterised in that** said monovalent anion forming the counter-ion of the anionic resin is of the same type as the monovalent anions contained in the aqueous solution.

4. Method according to claim 2 or 3, in which the aqueous solution further comprises monovalent metal cations, **characterised in that** the monovalent metal cation constituting the counter-ion of the cationic resin is of the same type as the monovalent metal cations contained in the aqueous solution.

5. Method according to one of claims 2 to 4, **characterised in that** it further comprises an operation (c) of regeneration of the anionic resin and/or the cationic resin by means of a regeneration agent.

6. Method according to claim 5, **characterised in that** the regeneration agent is an aqueous solution comprising a dissolved salt of which the cation is of the same type as the monovalent metal cation forming the counter-ion of the cationic resin.

7. Method according to claim 6, **characterised in that** the anion of the dissolved salt is of the same type as the monovalent anion forming the counter-ion of the anionic resin.

8. Method according to any one of claims 5 to 7, **characterised in that** regeneration operation (c) comprises treatment in series of the anionic resin then of the cationic resin.

9. Method according to one of claims 5 to 7, **characterised in that** regeneration operation (c) comprises the treatment in parallel of the anionic resin and of the cationic resin.

10. Use of the method according to any one of the preceding claims for the decalcification of whey or a permeate from the ultrafiltration of a whey, this whey and this permeate comprising Ca²⁺ and Mg²⁺ ions, Cl⁻ anions, Na⁺ and K⁺ cations and anions selected from the group consisting of phosphate anions, anions from organic acids able to form complexes with the Ca²⁺ and Mg²⁺ ions and their mixtures.

## Patentansprüche

1. Verfahren zur Dekalzifizierung einer wässrigen Lösung, das mehrwertige Kationen Ca²⁺ und Mg²⁺ und Anionen umfasst, die in der Lage sind, mit mindestens einem Teil der mehrwertigen Kationen Komplexe zu bilden, **dadurch gekennzeichnet, dass** es die folgenden Vorgänge umfasst:
(a) Substituieren mindestens eines Teils der Anionen, die in der Lage sind, die Komplexe der wässrigen Lösung zu bilden, durch einwertige Anionen, wie etwa Cl⁻, die nicht in der Lage sind, derartige Komplexe zu bilden, und
(b) Substituieren mindestens eines Teils der mehrwertigen Kationen der wässrigen Lösung durch einwertige metallische Kationen, wie etwa Na⁺ und/oder K⁺, wobei der Vorgang (b) gleichzeitig mit dem Vorgang (a) durchgeführt wird, oder durchgeführt wird, nachdem die wässrige Lösung dem Vorgang (a) unterzogen wurde.

2. Verfahren nach Anspruch 1, **dadurch gekennzeichnet, dass** der Vorgang (a) die Behandlung der wässrigen Lösung durch ein anionisches Harz umfasst, dessen Gegenion ein einwertiges Anion ist, das nicht in der Lage ist, Komplexe mit den mehrwertigen Kationen zu bilden, und dass Vorgang (b) die Behandlung der wässrigen Lösung mit einem kationischen Harz umfasst, dessen Gegenion ein mehrwertiges metallisches Kation ist.

3. Verfahren nach Anspruch 2, wobei die wässrige Lösung außerdem einwertige Anionen umfasst, die nicht in der Lage sind, Komplexe mit den mehrwertigen Kationen zu bilden, **dadurch gekennzeichnet, dass** das einwertige Anion, das das Gegenion des anionischen Harzes darstellt, von gleicher Art ist wie die einwertigen Anionen, die in der wässrigen Lösung vorhanden sind.

4. Verfahren nach Anspruch 2 oder 3, wobei die wässrige Lösung außerdem einwertige metallische Kationen umfasst, **dadurch gekennzeichnet, dass** das einwertige metallische Kation, das das Gegenion des kationischen Harzes darstellt, von gleicher Art ist wie die einwertigen metallischen Kationen, die in der wässrigen Lösung vorhanden sind.

5. Verfahren nach einem der Ansprüche 2 bis 4, **dadurch gekennzeichnet, dass** es außerdem einen Vorgang (c) der Regeneration des anionischen Harzes und/oder des kationischen Harzes mittels eines Regenerationsmittels umfasst.

6. Verfahren nach Anspruch 5, **dadurch gekennzeichnet, dass** das Regenerationsmittel eine wässrige Lösung ist, die ein gelöstes Salz umfasst, dessen Kation von gleicher Art ist wie das einwertige metallische Kation, das das Gegenion des kationischen Harzes darstellt.

7. Verfahren nach Anspruch 6, **dadurch gekennzeichnet, dass** das Anion des gelösten Salzes von gleicher Art ist wie das einwertige Anion, das das Gegenion des anionischen Harzes darstellt.

8. Verfahren nach irgendeinem der Ansprüche 5 bis 7, **dadurch gekennzeichnet, dass** der Vorgang (c) der Regeneration hintereinander zuerst die Behandlung des anionischen Harzes und dann die des kationischen Harzes umfasst.

9. Verfahren nach einer der Ansprüche 5 bis 7, **dadurch gekennzeichnet, dass** der Vorgang (c) der Regeneration die parallele Behandlung des anionischen Harzes und des kationischen Harzes umfasst.

10. Verwendung des Verfahrens nach einem der vorstehenden Ansprüche zur Dekalzifizierung eines Milchserums oder eines Permeats, das aus der Ultrafiltration von Milchserum resultiert, wobei dieses Milchserum und dieses Permeat Ca 2⁺- und Mg²⁺-Ionen, Cl⁻-Anionen, Na⁺- und K⁺-Kationen und Anionen umfassen, die ausgewählt sind aus der Gruppe, bestehend aus Phosphatanionen, aus Anionen, die von organischen Säuren stammen, die in der Lage sind, Komplexe mit den Ionen Ca²⁺ und Mg²⁺ zu bilden, und deren Mischungen.
